# FASCICULE DE BREVET EUROPEEN

(11) **EP 1 087 485 B1**
(45) Date de publication et mention de la délivrance du brevet: **03.09.2008**
(21) Numéro de dépôt: 00402568.0
(22) Date de dépôt: 18.09.2000
(51) Int. Cl.: H02G 3/04

(54) **Conduit de câblage électrique à charnière souple**
Elektrischer Kabelkanal mit weichem Scharnier
Electrical wiring duct with soft hinge

(30) Priorité: 24.09.1999 FR 9911953; 12.04.2000 FR 0004711
(43) Date de publication de la demande: 28.03.2001
(73) Titulaire: PLANET WATTOHM, 60300 Senlis (FR)
(72) Inventeur: Marcou, Jean-Claude, 87000 Limoges (FR); Albert, Christophe, 60300 Senlis (FR); Bonnassieux, Vincent, Mystic, CT 06355 (US)
(74) Mandataire: Santarelli

(56) Documents cités:
- EP-A- 0 526 024
- EP-A- 0 809 338
- DE-U- 29 507 233

## Description

L'invention se rapporte à un conduit de câblage électrique à charnière souple, comprenant principalement deux éléments profilés, à savoir un fond, le plus souvent à profil en U et un couvercle conformé pour s'emboîter à force sur ledit fond ; elle concerne plus particulièrement un perfectionnement relatif à une charnière longitudinale souple reliant le couvercle à une paroi latérale dudit fond.

Le brevet US N° 5 235 136 décrit un conduit de câblage du genre défini ci-dessus, dans lequel la charnière est constituée par un amincissement de matière s'étendant longitudinalement sur un côté entre la partie formant ledit fond et la partie formant ledit couvercle.

A l'opposé de cette charnière, longitudinalement, les bords du fond et du couvercle sont pourvus de moyens s'emboîtant à force, mettant à profit la relative flexibilité du matériau utilisé, généralement une matière plastique semi-rigide. Cependant, la zone de la charnière est relativement déformable et le conduit fermé peut s'ouvrir accidentellement sous l'effet d'un choc frontal, sur le couvercle, ou latéral, sur la paroi du fond qui comporte ladite charnière.

Pour remédier à cet inconvénient, le document antérieur préconise de prévoir un renfort à l'intérieur du fond, constitué par une aile longitudinale jouxtant la paroi du fond qui comporte ladite charnière. Ceci complique le processus d'extrusion du profilé constituant ledit conduit et limite la place disponible pour le câblage, à l'intérieur de ce conduit. L'invention permet de surmonter ces inconvénients.

Le document DE-U1-295 07 233 décrit un conduit de câblage électrique à charnière souple conformément au préambule de la revendication 1.

L'invention concerne plus particulièrement un perfectionnement permettant d'améliorer le verrouillage du couvercle en position de fermeture, notamment en cas de choc latéral.

Plus particulièrement, l'invention concerne un conduit de câblage électrique comportant un fond, de préférence à profil globalement en U et un couvercle conformé pour s'emboîter à force sur ledit fond, ledit couvercle étant rattaché latéralement audit fond par une charnière longitudinale définie par une bande souple et relativement déformable, caractérisé en ce que, ladite bande souple s'étendant à plat contre des faces latérales extérieures adjacentes dudit fond et dudit couvercle, il comporte une nervure et une rainure définies, au voisinage de ladite charnière, de part et d'autre de la direction longitudinale de ladite bande, l'un de ces deux éléments étant solidaire dudit fond et l'autre étant solidaire dudit couvercle, ladite nervure s'encastrant dans la rainure à la fermeture du couvercle pour établir une structure de rigidification au voisinage de ladite bande souple.

Avantageusement, la nervure et la rainure peuvent être conformées pour assurer une position ouverte ou au moins entrouverte, stable, du couvercle par rapport audit fond. Cette position stable est par exemple assurée par un contact ou arc-boutement entre le bord de la nervure et un bord de la rainure, intervenant pour une position donnée du couvercle et qui peut être forcé pour la fermeture complète du conduit, en mettant à profit la relative flexibilité de la charnière.

La charnière peut, quant à elle, être co-extrudée avec le couvercle et le fond. Elle sera par exemple réalisée dans un matériau différent plus souple, voire quelque peu élastique, par exemple par mise en oeuvre d'un processus de co-extrusion connu en soi.

Dans un mode de réalisation plus simple, actuellement préféré, ladite charnière peut consister en une bande adhésive rapportée.

En outre, le conduit peut comporter des moyens de fermeture par emboîtement à force définis entre les bords du fond et du couvercle opposés à ceux qui jouxtent ladite charnière, une première nervure interne faisant saillie de la face intérieure dudit couvercle venant se positionner, à la fermeture de celui-ci, à proximité desdits moyens de fermeture.

Cette nervure interne ne complique pas sensiblement l'extrusion du couvercle. A la fermeture, elle s'engage dans ledit fond et vient se placer près des moyens de fermeture. Par conséquent, elle assure un meilleur verrouillage de l'encliquetage des moyens de fermeture et une amélioration de la tenue au choc notamment les chocs dirigés suivant une direction perpendiculaire à une paroi latérale du conduit et s'appliquant sensiblement au niveau de la charnière souple.

En variante, on peut prévoir une seconde nervure interne faisant saillie de la face intérieure du couvercle et venant se positionner à la fermeture de celui-ci à proximité des moyens de rigidification. Cette seconde nervure assure une meilleure protection de la charnière, notamment par rapport aux chocs s'appliquant perpendiculairement à l'axe longitudinal du conduit et parallèlement à son fond.

Les moyens de rigidification peuvent comporter une nervure et une rainure définies, au voisinage de la charnière, de part et d'autre de la direction longitudinale de la bande, l'un de ces deux éléments étant solidaire du fond et l'autre étant solidaire du couvercle. La nervure s'encastre dans la rainure, à la fermeture du couvercle.

De préférence, la nervure des moyens de rigidification fait partie du couvercle tandis que la rainure fait partie du fond. Dans ces conditions, les moyens de rigidification comportent un bossage longitudinal interne s'étendant près d'un bord dudit fond et ladite seconde nervure interne s'étend de préférence sensiblement le long de toute la hauteur de ce bossage. L'inverse est possible.

De préférence encore, la seconde nervure interne comporte un bord replié s'engageant sous ce bossage.

La même structure peut être adoptée pour ce qui concerne ladite première nervure interne qui peut s'étendre sensiblement le long de toute la hauteur d'un bossage faisant partie des moyens de fermeture définis ci-dessus. La première nervure interne, solidaire du couvercle, peut comporter aussi un bord replié s'engageant sous ce bossage.

Eventuellement, cette première nervure interne peut faire partie des moyens de fermeture eux-mêmes. Par exemple, ces moyens de fermeture peuvent comporter un premier épaulement longitudinal défini extérieurement au bord de la paroi latérale correspondante dudit fond et constituant intérieurement le bossage longitudinal sous lequel s'engage ladite première nervure. Dans ce cas, le couvercle comporte un simple bord latéral rabattu venant prendre appui, en position de fermeture, sur ce premier épaulement.

Eventuellement, les moyens de rigidification de la charnière souple peuvent eux-mêmes être simplifiés dès lors que la seconde nervure interne comporte un bord replié s'engageant sous le bossage adjacent. Dans ce cas, lesdits moyens de rigidification comportent un second épaulement longitudinal défini au bord de la paroi latérale correspondante dudit fond et constituant intérieurement le bossage correspondant. Le couvercle comporte un bord latéral rabattu venant prendre appui, en position de fermeture, sur ce second épaulement.

L'invention sera mieux comprise et d'autres avantages de celle-ci apparaîtront plus clairement à la lumière de la description qui va suivre de plusieurs modes de réalisation d'un conduit de câblage électrique conforme à son principe, donnée uniquement à titre d'exemple et faite en référence aux dessins annexés dans lesquels :
- la figure 1 est une vue en section transversale d'un premier mode de réalisation d'un conduit de câblage, le couvercle étant ouvert ;
- la figure 2 est une vue analogue à la figure 1, le couvercle étant entrouvert dans une position stable ;
- la figure 3 est une vue analogue à la figure 1, le couvercle étant fermé ;
- la figure 4 est une vue en section droite d'un second mode de réalisation conforme à l'invention, le couvercle étant entrouvert ;
- la figure 5 est une vue analogue à la figure 4, le couvercle étant fermé ;
- la figure 6 est une vue en section droite d'un troisième mode de réalisation d'un conduit de câblage conforme à l'invention, le couvercle étant entrouvert ;
- la figure 7 est une vue analogue à la figure 6, le couvercle étant fermé ;
- la figure 8 est une vue semblable à la figure 7, illustrant une variante ;
- la figure 9 est une vue en section transversale d'un autre mode de réalisation d'un conduit de câblage, le couvercle étant fermé ;
- la figure 10 est une vue analogue à la figure 9, illustrant une variante ;
- la figure 11 est une vue analogue à la figure 9, illustrant encore une variante ;
- la figure 12 est une vue analogue à la figure 9, illustrant encore une variante ; et
- la figure 13 est une vue analogue à la figure 9 illustrant une autre variante.

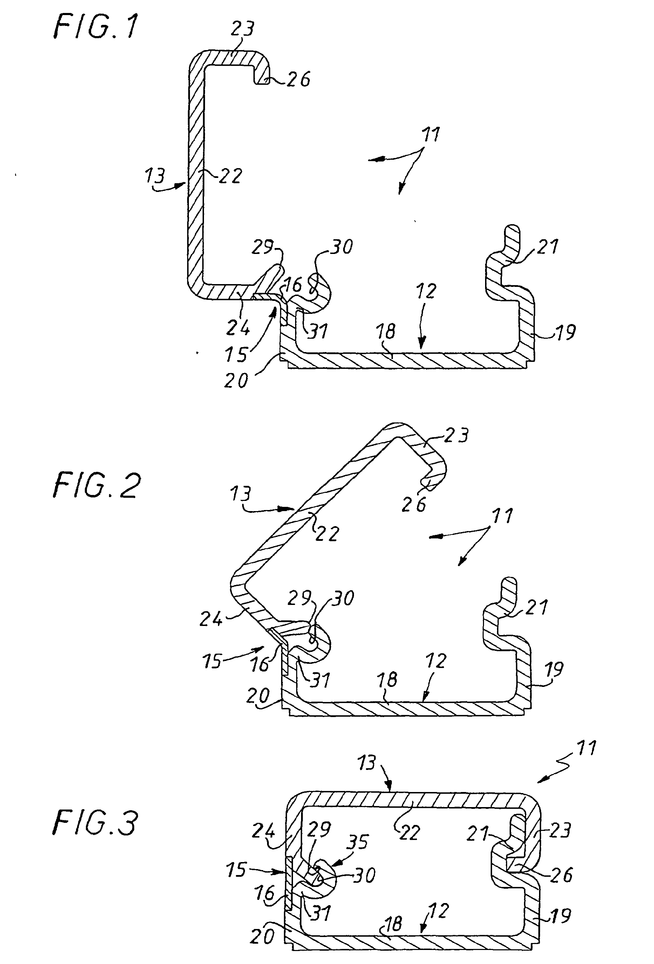

En se reportant plus particulièrement aux figures 1 à 3, on voit que le conduit de câblage électrique 11 se compose principalement d'un fond 12 à profil globalement en U, d'un couvercle 13 et d'une charnière 15 longitudinale définie par une bande 16 souple et relativement déformable, s'étendant entre le fond et le couvercle. La bande souple 16 s'étend à plat contre des faces latérales extérieures adjacentes, dudit fond 12 et dudit couvercle 13. Elle se plie longitudinalement à l'ouverture. Ces trois éléments sont représentés en section transversale ; ils sont constitués de profilés extrudés et ont par conséquent une section transversale invariable. La description du conduit en section transversale suffit donc à le caractériser. Le couvercle 13 a ici une section globalement en forme de U ; il est conformé pour s'emboîter à force sur le fond 12.

Plus particulièrement, ledit fond est constitué d'une paroi plane 18, en forme de bande, formant la base du conduit prolongée par deux parois latérales 19, 20 s'étendant longitudinalement, globalement perpendiculairement à la paroi 18. La paroi latérale 20 est rattachée au couvercle 13 par la charnière 15 tandis que la paroi latérale opposée 19 comporte une gorge 21 conformée dans celle-ci, ouvrant longitudinalement sur sa face extérieure.

Par ailleurs, le couvercle 13 comporte une bande plate 22 prolongée longitudinalement par deux parois latérales 23, 24 globalement perpendiculaires à la bande 22 et coopérant respectivement avec les parois latérales 19, 20 du fond. La paroi latérale 23 comporte un bord rentrant 26, plié à 90°, prévu pour pouvoir s'engager dans la gorge longitudinale 21 de la paroi latérale 19 du fond. Ladite gorge longitudinale 21 et ledit bord rentrant 26 forment des moyens de fermeture par emboîtement à force. L'emboîtement est possible en raison d'une flexibilité suffisante de la paroi latérale 19, notamment.

En effet, le fond et le couvercle au moins sont réalisés de préférence en matière plastique semi-rigide, comme la plupart des conduits de câblage disponibles dans le commerce, ce matériau se prêtant à ce type de fermeture par emboîtement à force. La bande souple 16 qui constitue la charnière est réalisée dans un matériau beaucoup plus déformable que le fond et le couvercle, voire un matériau légèrement élastique, par exemple un matériau élastomère.

Cependant, dans l'exemple, la bande 16 constituant la charnière 15 est co-extrudée en même temps que le fond et le couvercle, par mise en oeuvre d'un procédé de co-extrusion bi-matière, connu en soi. Le conduit 11 est donc formé en une seule opération d'extrusion.

Selon une caractéristique importante de l'invention, le conduit 11 comporte une nervure 29 et une rainure 30 définies de part et d'autre de la direction longitudinale de la bande 16 constituant ladite charnière.

Plus précisément, dans l'exemple, la nervure 29 fait partie du couvercle tandis que la rainure 30 fait partie du fond. Bien entendu, l'inverse est possible.

Quoi qu'il en soit, lors de la fermeture du couvercle, la nervure 29 s'encastre dans la rainure 30 pour établir une structure de rigidification 35 autour de la bande souple 16. Ceci est plus particulièrement visible sur la figure 3. On voit que, lorsque le couvercle est fermé, les deux parois latérales 19, 20 du fond et les deux parois latérales 23, 24 du couvercle, s'emboîtent respectivement, d'une façon telle que les efforts qui peuvent s'exercer ultérieurement sur le conduit, sont entièrement absorbés sans déformation par le fond et le couvercle, la charnière étant "doublée" par ladite structure de rigidification 35 qui lui épargne toute contrainte et déformation.

Dans l'exemple décrit, la nervure 29 consiste en un bord rentrant du couvercle 13 tandis que la rainure 30 est conformée le long d'un bord rentrant du fond. Le bord rentrant du couvercle s'étend à l'extrémité de la paroi latérale 24 à laquelle est raccordée ladite charnière tandis que le bord rentrant du fond s'étend à l'extrémité de la paroi latérale 20 du fond à laquelle est raccordée la même charnière. Ces deux bords rentrants sont orientés sensiblement à 45° vers l'intérieur des parois qui les portent, respectivement. La rainure 30 a un profil en forme de crochet ouvert en regard de la trajectoire du bord rentrant du couvercle, lors de la fermeture de ce dernier.

Sur la figure 1, le conduit est représenté largement ouvert, le couvercle et le fond étant sensiblement perpendiculaires l'un à l'autre, globalement.

En considérant la figure 2, on note que, pour une position prédéterminée du couvercle, le bord extrême de la nervure 29 vient au contact du bord extrême de la rainure 30, ce qui définit une position stable dudit couvercle 13 par rapport audit fond 12.

Dans ces conditions, la fermeture effective du conduit ne peut être obtenue qu'en forçant légèrement la fermeture au-delà de cette position stable, ce qui se traduit par un léger étirement du matériau constituant la bande 16 formant charnière. Lorsque cette position stable entrouverte est dépassée, les moyens de fermeture par emboîtement à force 21, 26 définis sur les parois latérales 19, 23 coopèrent, moyennant une légère flexion desdites parois latérales jusqu'à ce que le couvercle s'emboîte sur le fond, comme représenté sur la figure 3.

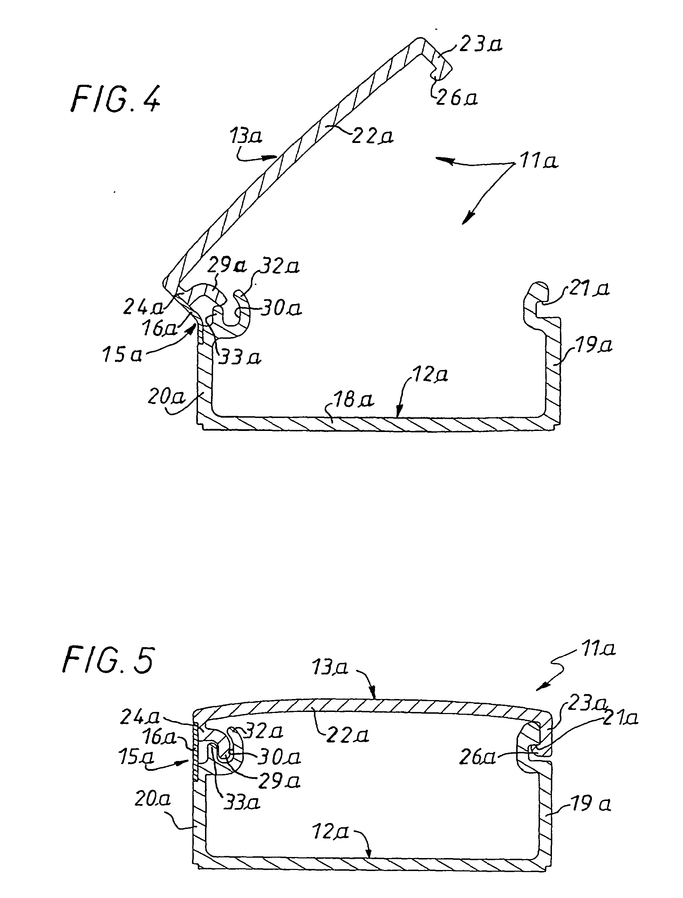

Les figures 4 et 5 illustrent un autre mode de réalisation où les éléments de structure analogues à ceux des figures 1 à 3 portent les mêmes références numériques avec la lettre a en indice. Comme précédemment, les moyens de fermeture par emboîtement à force définis à l'opposé de la charnière comportent une gorge longitudinale 21a ouvrant à l'extérieur de la paroi latérale du fond et un bord rentrant 26a (à 90°). Le bord supérieur de la paroi latérale 19a ainsi que ledit bord rentrant 26a sont arrondis pour faciliter l'emboîtement à force, à la fermeture. Du côté de la bande 16a formant la charnière 15a, la nervure 29a du couvercle est une partie rattachée à une paroi latérale 24a du couvercle sensiblement perpendiculairement à celle-ci (elle forme une sorte de crochet en section droite). Elle est conformée pour s'engager dans une rainure 30a à profil sensiblement en U rattachée latéralement, ici près de sa base, à un bord longitudinal de la paroi latérale 20a du fond.

Comme on peut le voir sur les dessins, l'aile interne 32a de la rainure est légèrement recourbée vers l'extérieur tandis que l'aile externe 33a est de hauteur inférieure à l'aile interne.

Comme dans l'exemple précédent, la charnière est dans un matériau relativement plus souple et plus flexible que le matériau constituant le fond et le couvercle. L'ensemble est obtenu par co-extrusion bi-matière.

Comme précédemment, la nervure et la rainure sont conformées pour définir une position stable entrouverte du couvercle. Cette position est représentée à la figure 4. A cette position, le bord de la nervure 29a prend appui sur le bord de l'aile externe 33a de la rainure. Cependant, si on force le couvercle vers sa position de fermeture, une légère extension de la charnière entraîne l'emboîtement de la nervure dans la rainure jusqu'à obtenir la position illustrée sur la figure 5.

Dans cette position, le fond 12a et le couvercle 13a sont rigidement emboîtés de chaque côté du conduit sur toute la longueur de celui-ci et la charnière 15a se trouve protégée de toute déformation par la coopération entre la nervure 29a et la rainure 30a.

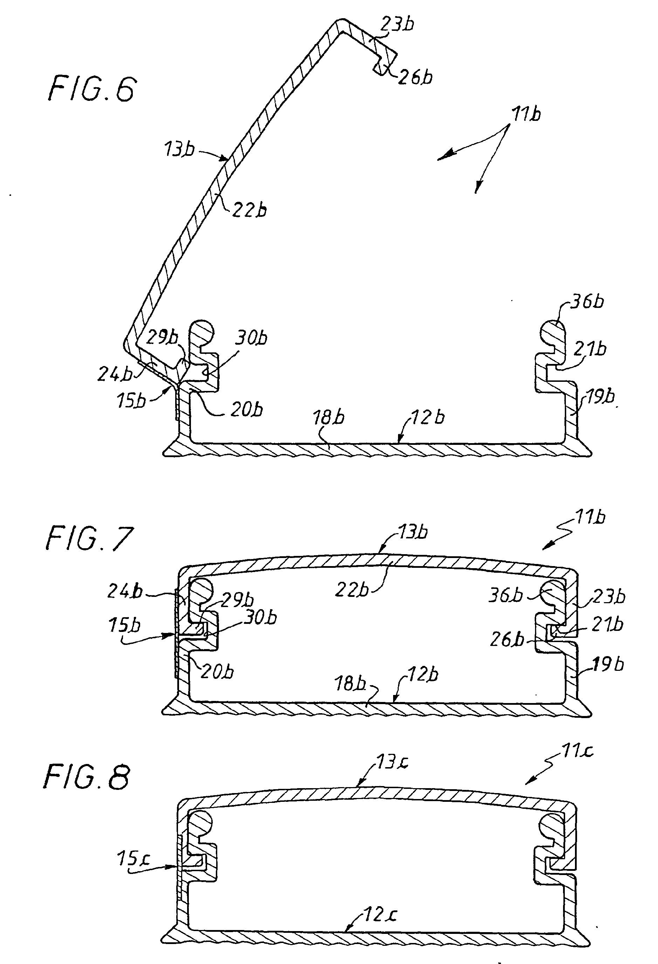

Les figures 6 et 7 illustrent encore un autre mode de réalisation, actuellement préféré, où les éléments de structure analogue portent les mêmes références numériques avec l'indice b. On retrouve donc un fond 12b à profil globalement en forme de U et un couvercle 13b également à profil globalement en forme de U.

Le fond 12b comporte une paroi plane 18b en forme de bande formant la base du conduit et deux parois latérales 19b, 20b s'étendant longitudinalement, globalement perpendiculairement à la paroi 18b. De façon semblable, le couvercle 13b comporte une bande 22b prolongée longitudinalement par deux parois latérales 23b, 24b approximativement perpendiculaires à la bande 22b et coopérant respectivement avec les parois latérales 19b, 20b du fond.

Dans cet exemple, les parois latérales 19b, 20b du fond sont semblables et symétriques par rapport à un plan médian du conduit. Il en est de même des parois latérales 23b, 24b du couvercle. Dans cet exemple, la charnière 15b est rapportée sur les parois 20b, 24b du fond et du couvercle qui se trouvent dans le prolongement l'une de l'autre, sur un côté du conduit lorsque le couvercle est emboîté sur ledit conduit (figure 7). Avantageusement, la charnière 15b est constituée d'une bande adhésive.

Du côté opposé à la charnière, la paroi latérale du conduit comporte une gorge longitudinale 21b ouvrant sur la face extérieure de cette paroi latérale tandis que l'extrémité de la paroi latérale 23b correspondante du couvercle comporte un bord rentrant 26b à 90°, conformé pour s'engager dans cette gorge longitudinale.

La gorge longitudinale 21b et le bord rentrant 26b forment des moyens de fermeture par emboîtement à force, grâce notamment à la flexibilité de la paroi latérale 19b.

Le bord de la paroi latérale du fond comporte un bourrelet arrondi 36b qui facilite l'emboîtement à force du couvercle sur le fond.

Du côté de la charnière, l'agencement est semblable, c'est-à-dire que la paroi latérale comporte une gorge qui constitue la rainure 30b de ladite structure de rigidification tandis que l'extrémité de la paroi latérale du couvercle comporte un bord rentrant à 90° qui constitue ladite nervure 29b de la structure de rigidification. Dans ce mode de réalisation, la position stable entrouverte du couvercle est obtenue lorsque l'extrémité du bord rentrant rencontre la paroi latérale 20b du fond, au voisinage immédiat de ladite rainure 30b. Ceci est visible sur la figure 6.

En appuyant sur le couvercle pour le forcer vers sa position de fermeture complète, on provoque l'engagement du bord rentrant (la nervure 29b) dans ladite rainure 30b.

Selon la variante de la figure 8, le fond 12c, le couvercle 13c et la charnière 15c sont co-extrudés, comme expliqué en référence au mode de réalisation précédent.

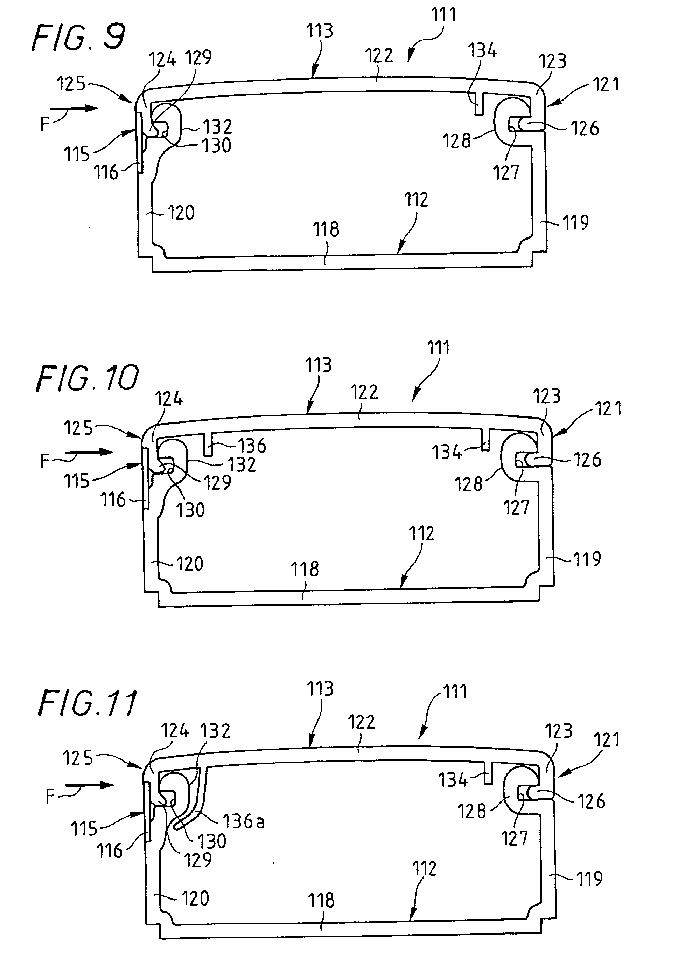

Sur les figures 9 à 13, les éléments de structure analogues portent les mêmes références numériques.

En se reportant plus particulièrement à la figure 9, on voit que le conduit de câblage électrique 111 se compose principalement d'un fond 112 à profil globalement en U, d'un couvercle 113 et d'une charnière 115 longitudinale définie par une bande 116 souple et relativement déformable, s'étendant latéralement entre le fond et le couvercle. Comme précédemment, la bande souple 116 s'étend à plat entre des faces latérales extérieures adjacentes du fond 112 et du couvercle 113. La matière utilisée pour constituer le fond et le couvercle est une matière plastique semi-rigide, susceptible de se déformer momentanément sous l'effet d'une contrainte. Le conduit et le couvercle sont conformés pour s'emboîter à force.

Plus particulièrement, le fond est constitué d'une paroi plane 118 en forme de bande, formant la base du conduit et cette base est prolongée par deux parois latérales 119, 120, s'étendant longitudinalement parallèlement l'une à l'autre, c'est-à-dire globalement perpendiculairement à la paroi 118. La paroi latérale 120 est rattachée au couvercle 113 par la charnière 115. La paroi latérale opposée 119 comporte un bord conformé pour coopérer avec le bord correspondant, libre, du couvercle. Autrement dit, des moyens de fermeture par emboîtement à force 121 sont définis entre les bords du fond et du couvercle opposés à ceux qui jouxtent la charnière 115.

De même, des moyens de rigidification 125 sont prévus au voisinage de la bande souple 116 par la coopération d'éléments de structure solidaires du fond et du couvercle, respectivement.

Ainsi, le couvercle 113 comporte une bande plate 122 prolongée longitudinalement par deux parois latérales 123, 124, globalement perpendiculaires à la bande 122 et coopérant respectivement avec les parois latérales 119, 120 du fond.

La paroi latérale 123 comporte un bord rentrant 126, plié à 90°, prévu pour pouvoir s'engager dans une gorge longitudinale 127 de la paroi latérale 119 du fond. Cette gorge longitudinale 127 et le bord rentrant 126 forment lesdits moyens de fermeture par emboîtement à force 121. L'emboîtement est possible en raison d'une flexibilité suffisante de la paroi latérale 119, notamment. En raison de la présence de la gorge longitudinale définie dans la paroi latérale 119, les moyens de fermeture créent un premier bossage longitudinal 128 interne, c'est-à-dire s'étendant le long du bord dudit fond, à l'intérieur de celui-ci.

La bande souple 116 qui constitue la charnière est réalisée dans un matériau beaucoup plus déformable que le fond et le couvercle, voire un matériau légèrement élastique, par exemple un matériau élastomère. Cependant, la bande 116 peut être co-extrudée en même temps que le fond et le couvercle, par mise en oeuvre d'un procédé de co-extrusion bi-matière, connu en soi. Le conduit 111 peut donc être formé en une seule opération d'extrusion. Les moyens de rigidification 125 sont définis au voisinage de la bande souple par des éléments de structure coopérant à la fermeture du couvercle. Il s'agit d'une nervure 129 et d'une rainure 130 définies le long de la direction longitudinale de la bande 116 constituant la charnière. Dans l'exemple, la nervure 129 fait partie du couvercle tandis que la rainure 130 fait partie du fond. Lors de la fermeture du couvercle, la nervure 129 s'encastre dans la rainure 130 pour établir une protection rigide autour de la bande souple 116. Ainsi, les efforts qui peuvent s'exercer ultérieurement sur le conduit sont absorbés, sans déformation, par le fond et le couvercle, la charnière étant doublée par lesdits moyens de rigidification. La nervure 129 consiste en un bord rentrant du couvercle 113 tandis que la rainure 130 est conformée le long d'un bord rentrant du fond. Le bord rentrant du couvercle s'étend à l'extrémité de la paroi latérale 124 à laquelle est raccordée ladite charnière tandis que ledit bord rentrant du fond s'étend à l'extrémité de la paroi latérale 120 du fond à laquelle est raccordée la même charnière.

Par conséquent, les moyens de rigidification forment un second bossage longitudinal interne 132 (c'est-à-dire faisant saillie longitudinalement à l'intérieur du conduit).

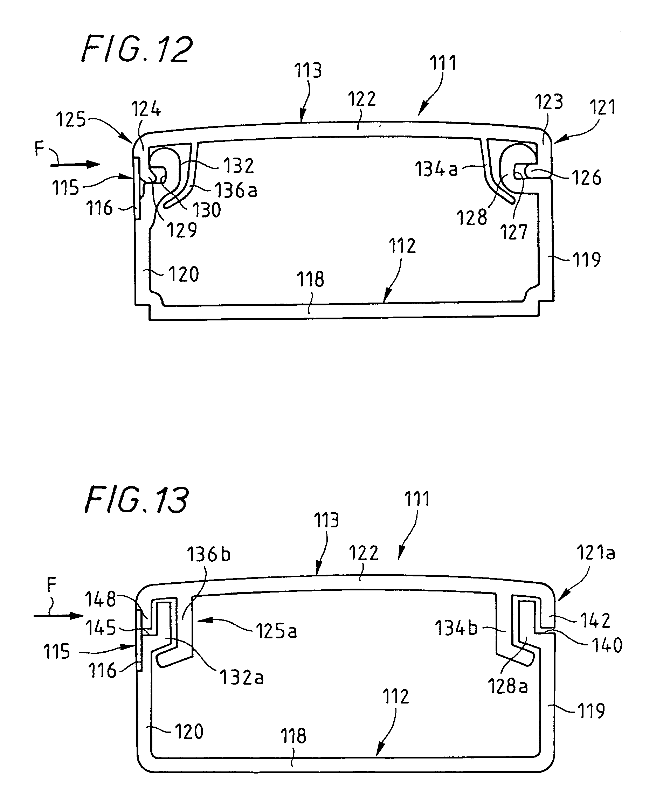

Selon une caractéristique importante, une première nervure interne 134 fait saillie de la face intérieure du couvercle et vient se positionner, à la fermeture de celui-ci, à proximité des moyens de fermeture 121 définis ci-dessus. La présence de cette nervure interne 134 permet d'assurer un meilleur verrouillage des moyens de fermeture et surtout une amélioration de la tenue aux chocs suivant la direction de la flèche F indiquée sur la figure 9. Comme on le voit à la figure 12, la première nervure interne 134a peut s'étendre sensiblement le long de la totalité du premier bossage.

Selon la variante de la figure 10, une seconde nervure interne 136 fait saillie de la face intérieure du couvercle et vient se positionner à la fermeture de celui-ci à proximité des moyens de rigidification 125.

Dans l'exemple de la figure 11, la seconde nervure interne 136a s'étend sensiblement le long de toute la hauteur dudit second bossage. Elle comporte aussi un bord recourbé vers l'extérieur et s'engageant sous le second bossage.

Dans la variante de la figure 12, la première nervure interne 134a s'étend sensiblement le long de la totalité du premier bossage 128 et, elle comporte aussi un bord recourbé, vers l'extérieur, s'engageant sous ce bossage.

Dans l'exemple de la figure 13, les moyens de fermeture 121a comme les moyens de rigidification 125a sont simplifiés et, en particulier, ladite première nervure interne 134b fait partie des moyens de fermeture. Ces derniers comportent un premier épaulement longitudinal 140 (qui se substitue à la rainure) défini extérieurement au bord de la paroi latérale 119 correspondante dudit fond. Ce premier épaulement longitudinal forme intérieurement ledit premier bossage longitudinal 128a. Le couvercle est simplifié dans ce mode de réalisation. Il comporte un simple bord latéral rabattu 142 venant prendre appui, en position de fermeture du couvercle sur ledit premier épaulement.

Dans ce mode de réalisation, ladite première nervure interne 134b doit comporter un bord recourbé (vers l'extérieur) s'engageant sous ledit premier bossage 128a puisque ladite première nervure fait partie desdits moyens de fermeture.

De même, les moyens de rigidification 125a comportent un second épaulement longitudinal 145 défini extérieurement au bord de la paroi latérale 120 correspondante du fond et formant intérieurement ledit second bossage 132a. Dans ce mode de réalisation, la seconde nervure interne 136b comporte un bord recourbé s'engageant sous le second bossage 132a. Le couvercle comporte de ce côté également un simple bord latéral rabattu 148 venant prendre appui, en position de fermeture du couvercle, sur ledit second épaulement 145.

D'autres variantes sont possibles. En particulier, il est à noter que la charnière 116 peut être constituée d'une bande adhésive rapportée sur les parois latérales du fond et du couvercle. Dans ce cas, le fond et le couvercle sont extrudés séparément et il n'est pas nécessaire d'avoir recours à des équipements d'extrusion bi-matière.

## Revendications

1. Conduit de câblage électrique comportant un fond (12), de préférence à profil globalement en U et un couvercle (13) conformé pour s'emboîter à force sur ledit fond, ledit couvercle étant rattaché latéralement audit fond par une charnière (15) longitudinale définie par une bande souple et relativement déformable, **caractérisé en ce que**, ladite bande souple s'étendant à plat contre des faces latérales extérieures adjacentes dudit fond et dudit couvercle, il comporte une nervure (29) et une rainure (30) définies, au voisinage de ladite charnière, de part et d'autre de la direction longitudinale de ladite bande, l'un de ces deux éléments étant solidaire dudit fond et l'autre étant solidaire dudit couvercle, ladite nervure s'encastrant dans la rainure à la fermeture du couvercle pour établir une structure de rigidification au voisinage de ladite bande souple.

2. Conduit selon la revendication 1, **caractérisé en ce que** ladite nervure (29) fait partie dudit couvercle tandis que ladite rainure (30) fait partie dudit fond.

3. Conduit selon la revendication 2, **caractérisé en ce que** ladite nervure (29) consiste en un bord rentrant dudit couvercle.

4. Conduit selon la revendication 3, **caractérisé en ce que** ladite rainure (30) est conformée le long d'un bord rentrant dudit fond.

5. Conduit selon l'ensemble des revendications 3 et 4, **caractérisé en ce que** lesdits bords rentrants sont orientés sensiblement à 45° vers l'intérieur des parois qui les portent, respectivement.

6. Conduit selon la revendication 2, **caractérisé en ce que** ladite nervure (29a) du couvercle est une partie rattachée à une paroi dudit couvercle sensiblement perpendiculairement à celle-ci et conformée pour s'engager dans une rainure (30a) à profil sensiblement en U rattachée latéralement à un bord longitudinal dudit fond.

7. Conduit selon la revendication 6, **caractérisé en ce que** ladite nervure (29a) a un profil en forme de crochet.

8. Conduit selon la revendication 2, **caractérisé en ce que** la paroi latérale dudit fond qui comporte ladite charnière est globalement flexible et comprend une rainure (30b) précitée, conformée dans celle-ci et ouvrant longitudinalement sur la face extérieure de cette paroi latérale (20b) et **en ce que** ladite nervure (29b) est constituée par un bord rentrant dudit couvercle.

9. Conduit selon l'une des revendications précédentes, **caractérisé en ce que** ledit fond (12) et ledit couvercle (13) sont en matière plastique semi-rigide aux parois élastiquement flexibles tandis que ladite charnière (15) est en matériau élastomère notablement plus souple que les parois dudit fond et dudit couvercle.

10. Conduit selon la revendication 9, **caractérisée en ce que** ledit fond, ledit couvercle et ladite charnière sont co-extrudées.

11. Conduit selon la revendication 9, **caractérisé en ce que** ladite charnière 15b est rapportée sur les parois latérales dudit fond et dudit couvercle.

12. Conduit selon la revendication 11, **caractérisé en ce que** ladite charnière (15b) est constituée d'une bande adhésive.

13. Conduit selon la revendication 1, **caractérisé en ce qu'**il comporte en outre des moyens de fermeture par emboîtement à force (121) définis entre les bords du fond et du couvercle opposés à ceux qui jouxtent ladite charnière, une première nervure interne (134) faisant saillie de la face intérieure dudit couvercle venant se positionner, à la fermeture de celui-ci, à proximité desdits moyens de fermeture.

14. Conduit de câblage selon la revendication 13, **caractérisé en ce qu'**il comporte en outre une seconde nervure interne (136) faisant saillie de la face intérieure du couvercle et venant se positionner à la fermeture de celui-ci à proximité desdits moyens de rigidification.

15. Conduit de câblage selon la revendication 13 ou 14, **caractérisé en ce que** les moyens de fermeture comportent un premier bossage longitudinal interne (128) et **en ce que** ladite première nervure interne (134a) s'étend sensiblement le long de la totalité dudit premier bossage.

16. Conduit de câblage selon la revendication 15, **caractérisé en ce que** ladite première nervure interne comporte un bord recourbé s'engageant sous ledit premier bossage (128).

17. Conduit de câblage selon la revendication 15 ou 16, **caractérisé en ce que** ledit premier bossage (128) longitudinal résulte d'une rainure (127) faisant partie des moyens de fermeture, ménagée sur la paroi latérale correspondante dudit fond.

18. Conduit de câblage selon l'une des revendications 14 à 17, **caractérisé en ce que**, les moyens de rigidification (125) comportent un second bossage longitudinal (132) interne et **en ce que** ladite seconde nervure interne (136a) s'étend sensiblement le long de toute la hauteur dudit second bossage.

19. Conduit de câblage selon la revendication 18, **caractérisé en ce que** ladite seconde nervure interne (136a) comporte un bord recourbé s'engageant sous ledit second bossage (132).

20. Conduit de câblage selon la revendication 19, **caractérisé en ce que** lesdits moyens de rigidification comportent une nervure (129) et une rainure (130) définies, au voisinage de ladite charnière, selon la direction longitudinale de ladite bande, l'un de ces deux éléments étant solidaire dudit fond et l'autre étant solidaire dudit couvercle et **en ce que** ladite nervure s'encastre dans la rainure à la fermeture du couvercle.

21. Conduit de câblage selon la revendication 20, **caractérisé en ce que** ladite nervure (129) des moyens de rigidification fait partie dudit couvercle tandis que ladite rainure (130) fait partie dudit fond.

22. Conduit de câblage selon la revendication 21, **caractérisé en ce que** ledit second bossage longitudinal (132) résulte de la rainure précitée faisant partie des moyens de rigidification, ménagée sur la paroi latérale correspondante dudit fond.

23. Conduit de câblage selon l'une des revendications 13 à 16, **caractérisé en ce que** ladite première nervure interne (134b) fait partie desdits moyens de fermeture (121a).

24. Conduit de câblage selon la revendication 23, **caractérisé en ce que** lesdits moyens de fermeture comportent un premier épaulement longitudinal (140) défini au bord de la paroi latérale correspondante dudit fond et constituant intérieurement ledit premier bossage longitudinal (128a).

25. Conduit de câblage selon la revendication 24, **caractérisé en ce que** ledit couvercle comporte un bord latéral rabattu 142 venant prendre appui, en position de fermeture, sur ledit premier épaulement.

26. Conduit de câblage selon la revendication 19, **caractérisé en ce que** lesdits moyens de rigidification (125a) comportent un second épaulement longitudinal (145) défini au bord de la paroi latérale correspondante dudit fond et formant intérieurement ledit second bossage (132a).

27. Conduit de câblage selon la revendication 26, **caractérisé en ce que** ledit couvercle comporte un bord latéral rabattu (148), venant prendre appui en position de fermeture, sur ledit second épaulement (145).

## Claims

1. Electrical wiring trunking including a back portion (12) which preferably has a globally U-shaped profile and a cover portion (13) shaped to nest forcibly with said back portion, said cover portion being attached laterally to said back portion by a longitudinal hinge (15) defined by a flexible and relatively deformable strip, **characterised in that**, said flexibly strip extending flat against adjacent exterior lateral faces of said back and said cover portion, it includes a rib (29) and a groove (30) defined, in the vicinity of said hinge, on either side of the longitudinal direction of said strip, one of these two members being attached to said back portion and the other being attached to said cover portion, said rib fitting into the groove on closure of the cover portion to establish a stiffener structure in the vicinity of said flexible strip.

2. Trunking according to claim 1, **characterised in that** said rib (29) is part of said cover portion and said groove (30) is part of said back portion.

3. Trunking according to claim 2, **characterised in that** said rib (29) consists of a re-entrant rim of said cover portion.

4. Trunking according to claim 3, **characterised in that** said groove (30) is formed along a rentrant edge of said back portion.

5. Trunking according to the combination of claims 3 and 4, **characterised in that** said re-entrant edges are oriented at substantially 45° towards the interior of the respective walls that carry them.

6. Trunking according to claim 2, **characterized in that** said rib (29a) of the cover portion is a component attached to al wall of said cover portion, substantially perpendicularly thereto, and shaped to be engaged in a groove (30a) with a substantially U-shaped profile attached laterally to one longitudinal edge of said back portion.

7. Trunking according to claim 6, **characterised in that** said rib (29a) has a hook-shaped profile.

8. Trucking according to claim 2, **characterised in that** the lateral wall of said back portion that includes said hinge is globally flexible and comprises an aforementioned groove (30b), shaped therein and opening longitudinally onto the exterior face of that lateral wall (20b) , and said rib (29b) consists of a re-entrant edge of said cover portion.

9. Trunking according to any one of the preceding claims, **characterised in that** said back portion (12) and said cover portion (13) are of semi-rigid plastic material with elastically flexible walls and said hinge (15) is of an elastomer material significantly more flexible than the walls of said back portion and said cover portion.

10. Trunking according to claim 9, **characterised in that** said back portion, said cover portion and said hinge are co-extruded.

11. Trunking according to claim 9, **characterised in that** said hinge (15b) is attached to the lateral walls of said back and said cover portion.

12. Trunking according to claim 11, **characterised in that** said hinge (15b) consists of an adhesive strip.

13. Trunking according to claim 1, **characterised in that** it further includes forcible nesting closure means (121) defined between the edges of the back portion and the cover portion opposite those that adjoin said hinge, a first internal rib (134) projecting from the interior face of said cover portion being positioned, on closure of the cover portion, in the vicinity of said closure means.

14. Wiring trunking according to claim 13, **characterised in that** it further includes a second internal ribs(136) projecting from the inside face of the cover portion and taking up a position near said stiffener means when said cover portion is closed.

15. Wiring trunking according to claim 13 or 14, **characterised in that** said closure means include a first internal longitudinal boss (128) and said first internal rib (134a) extends substantially the whole length of said first boss.

16. Wiring trunking according to claim 15, **characterised in that** said first internal rib has a curved edge engaging under said first boss (128).

17. wiring trunking according to claim 15 or 16, **characterised in that** said first longitudinal boss (128) is formed by a groove (127) that is part of the closure means on the corresponding side wall of said back portion.

18. Wiring trunking according to any of claims 14 to 17, **characterised in that** the stiffener means (125) include a second internal longitudinal boss (132) and said second internal rib (136a) extends substantially the entire height of said second boss.

19. Wiring trunking according to claim 18, **characterised in that** said second internal rib (136a) has a curved edge engaging under said second boss (132).

20. Wiring trunking according to claim 19, **characterised in that** said stiffener means include a rib (129) and a groove (130) defined in the vicinity of said hinge and expending in the longitudinal direction of said strip, one of these two members being attached to said back portion and the other to said cover portion, and said rib is engaged in the groove when the cover portion is closed.

21. Wiring trunking according to claim 20, **characterised in that** said rib (129) of the stiffener means is part of said cover portion and said groove (130) is part of said back portion.

22. Wiring trunking according to claim 21, **characterised in that** said second longitudinal boss (132) is formed by the aforementioned groove forming part of the stiffener means on the corresponding side wall of said back portion.

23. Wiring trunking according to any of claims 13 to 16, **characterised in that** said first internal rib (134b) is part of said closure means (121a).

24. Wiring trunking according to claim 23, **characterised in that** said closure means include a first longitudinal shoulder (140) at the edge of the corresponding side wall of said back portion and internally forming said first longitudinal boss (12Ba).

25. Wiring trunking according to claim 24, **characterised in that** said cover portion has an upstanding lateral edge (142) which bears on said first shoulder said cover portion is closed.

26. Wiring trunking according to claim 19, **characterised in that** said stiffener means (125a) include a second longitudinal shoulder (145) at the edge of the corresponding side wall of said back portion and internally forming said second boss (132a).

27. Wiring trunking according to claim 26, **characterised in that** said cover portion has an upstanding lateral edge (148) which bears on said second shoulder (145) when said cover portion is closed.

## Patentansprüche

1. Kabelkanal mit einem Boden (12) mit einem vorzugswelse U-förmlgen Profil und einem Deckel (13), der zum kraftschlüssigen Aufstecken auf den Boden ausgebildet ist, wobel der Deckel seitlich am Boden durch ein längs verlaufendes Scharnier (15) angesetzt ist, das durch ein biegsames und ziemlich verformbares Band gebildet ist,
**dadurch gekennzeichnet, dass** er eine Rippe (29) und eine Nut (30) aufweist, die in der Nähe des Scharniers beldseits der Längsrichtung des Bands gebildet sind, das blegsame Band verläuft dabei flachllegend an den dem Boden und dem Deckel benachbarten seitlichen Außenseiten, wobei eines dieser beiden Elemente mit dem Boden und das andere mit dem Deckel fest verbunden ist, wobei sich die Rippe beim Schließen des Deckels in die Nut einpasst, um in der Nähe des biegsamen Bands eine Versteifungsstruktur herzustellen.

2. Kabelkanal nach Anspruch 1,
**dadurch gekennzeichnet, dass** die Rippe (29) zum Deckel gehört, während die Nut (30) zum Boden gehört.

3. Kabelkanal nach Anspruch 2,
**dadurch gekennzeichnet, dass** die Rippe (29) aus einem vom Deckel zurückspringenden Rand besteht.

4. Kabelkanal nach Anspruch 3,
**dadurch gekennzeichnet, dass** die Rippe (29) entlang eines vom Boden zurückspringenden Rands gebildet ist.

5. Kabelkanal nach den beiden Ansprüchen 3 und 4,
**dadurch gekennzeichnet, dass** die zurückspringenden Ränder im Wesentlichen um 45° zur Innenseite der Wände ausgerichtet sind, von denen sie jeweils getragen werden.

6. Kabelkanal nach Anspruch 2,
**dadurch gekennzeichnet, dass** die Rippe (29a) des Deckels ein Tell ist, das an eine zu diesem Im Wesentlichen quer verlaufende Wand des Deckels angesetzt und so ausgebildet ist, dass es in eine Nut (30a) mit einem im Wesentlichen U-förmigen Profil greift, die seitlich an einen Längsrand des Bodens angesetzt ist.

7. Kabelkanal nach Anspruch 6,
**dadurch gekennzeichnet, dass** die Rippe (29a) ein hakenförmlges Profil hat.

8. Kabelkanal nach Anspruch 2,
**dadurch gekennzeichnet, dass** die Seltenwand des Bodens, die das Scharnier aufweist, allgemein biegsam ist und eine vorstehend genannte Nut (30b) aufweist, die in ihr ausgebildet ist und an der Außenseite der Seitenwand (20b) In Längsrichtung offen ist, und dass die Rippe (29b) durch einen Rand gebildet ist, der vom Deckel zurückspringt.

9. Kabelkanal nach einem der vorhergehenden Ansprüche,
**dadurch gekennzeichnet, dass** der Boden (12) und der Deckel (13) aus halbstarrem Kunststoff sind, mit elastisch biegsamen Wänden, während das Scharnier (15) aus einem Elastomer ist, das wesentlich elastischer als die Wände des Bodens und des Deckels Ist.

10. Kabelkanal nach Anspruch 9,
**dadurch gekennzeichnet, dass** der Boden, der Deckel und das Scharnier coextrudiert sind.

11. Kabelkanal nach Anspruch 9,
**dadurch gekennzeichnet, dass** das Scharnier (15b) an den Seitenwänden des Bodens und des Deckels angesetzt ist.

12. Kabelkanal nach Anspruch 11,
**dadurch gekennzeichnet, dass** das Scharnier (15b) aus einem Klebestreifen gebildet Ist.

13. Kabelkanal nach Anspruch 1,
**dadurch gekennzeichnet, dass** er ferner Mittel (121) zum Schließen durch kraftschlüssiges Einstecken aufweist, die zwischen den Rändern des Bodens und des Deckels ausgebildet sind, die denen gegenüberliegen, die an das Scharnier angrenzen, wobei sich eine erste an der Innenseite des Deckels vorstehende innere Rippe (134) bei dessen Schließen in der Nähe der Schlleßmittel positioniert.

14. Kabelkanal nach Anspruch 13,
**dadurch gekennzeichnet, dass** er ferner eine zweite innere Rippe (136) umfasst, die an der Innenseite des Deckels vorsteht und sich bei dessen Schließen In der Nähe der Verstelfungsmittel positioniert.

15. Kabelkanal nach Anspruch 13 oder 14,
**dadurch gekennzeichnet, dass** die Schließmittel einen ersten inneren Längshöcker (128) aufweisen und dass die erste Innere Rippe (134a) im Wesentlichen entlang des gesamten Höckers verläuft.

16. Kabelkanal nach Anspruch 15,
**dadurch gekennzeichnet, dass** die erste Innere Rippe einen bogenförmigen Rand aufweist, der unter den ersten Höcker (128) greift.

17. Kabelkanal nach Anspruch 15 oder 16,
**dadurch gekennzeichnet, dass** der erste Längshöcker (128) aus einer zu den Schließmitteln gehörenden Nut (127) resultiert, die an der entsprechenden Seitenwand des Bodens ausgebildet ist.

18. Kabelkanal nach einem der Ansprüche 14 bis 17,
**dadurch gekennzeichnet, dass** die Verstelfungsmittel (125) einen zweiten Längshöcker (132) aufweisen

19. Kabelkanal nach Anspruch 18,
**dadurch gekennzeichnet, dass** die zweite innere Rippe (136a) einen gebogenen Rand aufweist, der unter den zweiten Höcker (132) greift.

20. Kabelkanal nach Anspruch 19,
**dadurch gekennzeichnet, dass** die Versteifungsmittel eine Rippe (129) und eine Nut (130) aufweisen, die In der Nähe des Scharniers In der Längsrichtung des Streifens gebildet sind, wobei eines der belden Elemente mit dem Boden und dass andere mit dem Deckel fest verbunden ist, und dass sich die Rippe beim Schließen des Deckels in die Nut einpasst.

21. Kabelkanal nach Anspruch 20,
**dadurch gekennzeichnet, dass** die Nut (129) der Verstelfungsmittel zum Deckel gehört, während die Rippe (130) zum Boden gehört.

22. Kabelkanal nach Anspruch 21,
**dadurch gekennzeichnet, dass** der zweiten Längshöcker (132) aus der vorstehend genannten, zu den Versteifungsmitteln gehörenden Nut resultiert, die an der entsprechenden Seitenwand des Bodens ausgebildet Ist.

23. Kabelkanal nach einem der Ansprüche 13 bis 16,
**dadurch gekennzeichnet, dass** die erste Innere Rippe (134b) zu den Schließmitteln (121a) gehört.

24. Kabelkanal nach Anspruch 23,
**dadurch gekennzeichnet, dass** die Schlleßmittel einen ersten Längsabsatz (140) aufweisen, der am Rand der entsprechenden Seitenwand des Bodens ausgebildet Ist und innen den ersten Längshöcker (128a) bildet.

25. Kabelkanal nach Anspruch 24,
**dadurch gekennzeichnet, dass** der Deckel einen gebördelten Seltenrand (142) aufweist, der In der geschlossenen Stellung auf dem Absatz aufliegt.

26. Kabelkanal nach Anspruch 19,
**dadurch gekennzeichnet, dass** die Versteifungsmittel (125a) einen zweiten Längsabsatz (145) aufweisen, der am Rand der entsprechenden Seitenwand des Bodens ausgebildet ist und innen den zweiten Höcker (132a) bildet.

27. Kabelkanal nach Anspruch 26,
**dadurch gekennzeichnet, dass** der Deckel einen gebördelten Seltenrand (148) aufweist der In der geschlossenen Stellung auf dem zweiten Absatz (145) aufliegt.
